# EUROPÄISCHE PATENTSCHRIFT

(11) **EP 4 237 312 B1**
(45) Veröffentlichungstag und Bekanntmachung des Hinweises auf die Patenterteilung: **22.07.2026**
(21) Anmeldenummer: 21805831.1
(22) Anmeldetag: 27.10.2021
(51) Int. Cl.: B62B 3/00, B62B 5/00, B60P 7/08, B60P 7/135

(54) **TRANSPORTSICHERUNG ZUR SICHERUNG VON WAREN AUF EINEM ROLLBEHÄLTER**
TRANSPORT FASTENING FOR FASTENING GOODS ON A ROLL CONTAINER
FIXATION DE TRANSPORT PERMETTANT LA FIXATION DE MARCHANDISES SUR UN CONTENEUR À ROULEAUX

(30) Priorität: 28.10.2020 AT 509312020; 21.05.2021 AT 504012021
(43) Veröffentlichungstag der Anmeldung: 06.09.2023
(73) Patentinhaber: Kratzmüller, Claudio, 8042 Graz (AT)
(72) Erfinder: Kratzmüller, Claudio, 8042 Graz (AT)
(74) Vertreter: Wildhack & Jellinek Patentanwälte GmbH
(86) Internationale Anmeldenummer: PCT/AT2021/060397
(87) Internationale Veröffentlichungsnummer: WO 2022/087644

(56) Entgegenhaltungen:
- EP-A1- 2 103 499
- EP-A1- 3 395 644
- EP-A1- 3 514 038
- KR-A- 20160 107 450

## Beschreibung

Die Erfindung betrifft eine Transportsicherung zur Sicherung von Waren auf einem Rollbehälter gemäß dem Oberbegriff von Anspruch 1 und einen Rollbehälter mit einer solchen Transportsicherung.

Rollbehälter, insbesondere Rollpaletten, sind im Logistikbereich weit verbreitet. Es gibt verschiedene Ausführungen, wobei gerade im Einzelhandelsbereich häufig Rollpaletten zum Einsatz kommen, die eine rechteckige, zumeist quadratische, Bodenplatte mit Rollen aufweisen, wobei an zwei gegenüberliegenden Rändern der Bodenplatte eine erste Seitenwand und parallel dazu eine zweite Seitenwand angeordnet sind. Die Seitenwände verhindern, dass Waren seitlich von der Rollpalette fallen oder rutschen. Die Vorderseite und die Rückseite sind zumeist offen. Dies ermöglicht eine Be- und Entladung von den zwei offenen Seiten.

Derartige Rollpaletten werden vor allem in Supermärkten verwendet. Die Rollbehälter werden in einem Zentrallager händisch oder automatisch beladen. Um die Beladung zu vereinfachen und die Waren besser auf der Rollpalette stapeln zu können, werden die Seitenwände für die automatisierte Beladung leicht aufgespreizt, sodass sie an ihrem oberen Ende über den Rand der Bodenplatte schräg nach außen ragen. Wenn die Seitenwände gespreizt sind, ragt jede Seitenwand an ihrem oberen Ende ca. 2,5 bis 5 cm nach außen, sodass der Abstand zwischen den Seitenwänden an ihrem oberen Ende um ca. 5 bis 10 cm vergrößert ist, im Vergleich zur senkrechten Ausrichtung. Dies geschieht üblicherweise durch spezielle Vorrichtungen, z.B. verschiebbare Haken.

Anschließend werden die beladenen Rollpaletten mit Lastkraftwagen zu den Supermarktfilialen gebracht. Dort können die Rollpaletten direkt zu den jeweiligen Verkaufsregalen geschoben werden und die Waren können von der Rollpalette abgeladen und direkt im Regal einsortiert werden.

Um während des Transports ein Herausfallen der Waren an der Vorder- und Rückseite zu vermeiden, sind verschiedene Vorrichtungen bekannt. Aus dem Stand der Technik sind zur Sicherung der Waren beispielsweise Gurte bekannt, die zwischen den Seitenwänden gespannt werden. Diese sind zwar einfach zu handhaben und stabil, allerdings sind die Waren oft unzureichend gegen ein Herausfallen gesichert.

Weiters sind aus dem Stand der Technik, z.B. aus GB 2529710 oder DE 20 2019 106 463 U1, flexible und dehnbare Planen bekannt, die zwischen den Seitenwänden gespannt werden können. Diese Vorrichtungen bieten zwar einen guten Schutz gegen das Herausfallen von Waren, allerdings ist die Handhabung aufwendiger. Zudem ist es notwendig, dass die Planen in ihrer Größe und Form dem jeweils verwendeten Rollbehälter angepasst werden.

Um eine rasche und einfache Handhabung, insbesondere bei der automatisierten Beladung, zu ermöglichen, ist es vorteilhaft, wenn die Transportsicherung an der Rückseite der Rollpalette nicht abgenommen werden muss, wenn die Rollpalette von der Vorderseite aus beladen wird. Bei geschlossener Transportsicherung wird bei der Beladung die andernfalls offene Rückseite durch die Transportsicherung abgedeckt, sodass ein Herabrutschen der Waren bei der Beladung vermieden werden kann. Die Stabilität und Haltbarkeit der Transportsicherung ist daher besonders relevant, da während der automatischen Beladung die Vorrichtung zum Aufspreizen der Seitenwände üblicherweise an der Rückseite der Rollpalette eingreift.

Die EP 2 103 499 A1 zeigt eine Transportsicherung zur Sicherung von Waren auf einem Rollbehälter mit einer ersten Seitenwand und einer dazu parallel gegenüberstehenden zweiten Seitenwand, wobei eine Sicherungsplatte zur Abdeckung einer offenen Seite vorgesehen ist, wobei die Sicherungsplatte über mit der Sicherungsplatte verbundene Gurte zwischen den Seitenwänden befestigt ist.

Die KR 2016 0107450 A, die EP 3 395 644 A1 und die EP 3 514 038 A1 zeigen ähnliche Transportsicherungen.

Aufgabe ist es daher eine Transportsicherung bereitzustellen, durch die Waren auf einem Rollbehälter zuverlässig gesichert werden können, wobei die Transportsicherung einfach und rasch geöffnet und geschlossen werden kann und dauerhaft haltbar ist.

Es liegt dementsprechend eine Transportsicherung zur Sicherung von Waren auf einem Rollbehälter zugrunde, mit einer ersten Seitenwand und einer der ersten Seitenwand parallel gegenüberstehenden zweiten Seitenwand, wobei zwischen den Seitenwänden offene Seiten ausgebildet sind, wobei die Transportsicherung eine Sicherungsplatte zur Abdeckung einer offenen Seite aufweist, wobei die Sicherungsplatte in ihrem oberen Bereich zumindest zwei obere Befestigungselemente zur Befestigung, Anordnung und/oder Einziehung eines zwischen der ersten und zweiten Seitenwand des Rollbehälters spannbaren oberen Gurtes aufweist, und wobei im unteren Bereich der Sicherungsplatte zumindest ein unteres Befestigungselement zum Anbringen eines unteren Befestigungsmittels zur Befestigung der Sicherungsplatte an der ersten und/oder der zweiten Seitenwand vorgesehen ist.

Es ist also vorgesehen, dass eine Sicherungsplatte zur Abdeckung einer offenen Seite vorgesehen ist, wobei die Sicherungsplatte in ihrem oberen Bereich zumindest zwei obere Befestigungselemente zur Befestigung eines zwischen der ersten und zweiten Seitenwand des Rollbehälters spannbaren oberen Gurtes aufweist, wobei die oberen Befestigungselemente derart ausgebildet sind, dass sie eine Bewegung des oberen Gurtes relativ zur Sicherungsplatte ermöglichen, und wobei zumindest ein unteres Befestigungselement zur Führung eines unteren Befestigungsmittels zur Befestigung der Sicherungsplatte im unteren Bereich der Sicherungsplatte vorgesehen ist.

Die Erfindung löst die Aufgabe mit den kennzeichnenden Merkmalen des Anspruchs 1.

Erfindungsgemäß ist dementsprechend vorgesehen, dass in den oberen Befestigungselementen ein elastisch dehnbarer oberer Gurt geführt ist, wobei der obere Gurt relativ beweglich zur Sicherungsplatte geführt ist.

Eine erfindungsgemäße Transportsicherung kann an der Seitenwand eines Rollbehälters so angeordnet werden, dass eine offene Seite des Rollbehälters abgedeckt wird. Zur Beladung kann die Transportsicherung einfach geöffnet werden und die Transportsicherung kann entlang der Seitenwand angeordnet werden. Die Transportsicherung kann also so an der Seitenwand befestigt werden, dass die Transportsicherung durch den oberen Gurt und das im zumindest einen unteren Befestigungselement geführte untere Befestigungsmittel an der Seitenwand drehbar bzw. verschwenkbar ist, insbesondere funktioniert die Transportsicherung wie eine Tür zum Verschließen der offenen Seite. Wenn die offene Seite abgedeckt werden soll, kann die Transportsicherung durch den oberen Gurt mit der anderen Seitenwand reversibel verbunden werden.

Die Handhabung unterscheidet sich nicht von dem Arbeitsablauf bei der Verwendung eines Gurts ohne eine erfindungsgemäße Transportsicherung. Die erfindungsgemäße Transportsicherung kann daher nach der erstmaligen Befestigung, im normalen Gebrauch besonders rasch und einfach geöffnet und geschlossen werden. Da der obere Gurt in den Befestigungselementen beweglich geführt ist, wird die Sicherungsplatte der erfindungsgemäßen Transportsicherung nur wenig belastet. So führt beispielsweise bei der automatischen Beladung das Aufspreizen der Seitenwände nur zu einer Belastung des oberen Gurts, während die Sicherungsplatte keinem seitlichen Zug ausgesetzt ist. Dies erhöht die Haltbarkeit der Transportsicherung wesentlich.

Durch die Befestigung im oberen Bereich, also an der oberen Hälfte der Sicherungsplatte und im unteren Bereich, also in der unteren Hälfte der Sicherungsplatte, wird eine stabile Befestigung erreicht.

Die Sicherungsplatte kann dementsprechend am Gurt entlang bewegt bzw. verschoben werden bzw. kann der Gurt quer zur Sicherungsplatte bzw. relativ zu den beiden oberen Befestigungselementen reversibel bewegt werden.

Vorteilhafte Ausgestaltungen ergeben sich durch die Merkmale der abhängigen Ansprüche:
Es kann vorgesehen sein, dass die oberen Befestigungselemente und das untere Befestigungselement im oberen und unteren Randbereich der Sicherungsplatte angeordnet sind. Die Randbereiche reichen dabei ausgehend von der Unterkante bis zu 25 % der Plattenhöhe und von 75% der Plattenhöhe bis zur Oberkante. Bei einer Platte mit 1400 mm Höhe umfassen die Randbereiche also jeweils 350 mm von der Unterkante bzw. der Oberkante ausgehend. Dadurch wird eine besonders stabile Befestigung der Transportsicherung an einem Rollbehälter ermöglicht.

Um eine großflächige Abdeckung der offenen Seite zu erreichen, kann vorgesehen sein, dass die Transportsicherung im Wesentlichen rechteckig ausgebildet ist, wobei die Ecken abgerundet sein können um Beschädigungen zu vermeiden. Die Transportsicherung ist für die Verwendung mit handelsüblichen Rollpaletten daher besonders geeignet, wenn die Oberkante und die Unterkante der Sicherungsplatte parallel zueinander verlaufen, wobei die Seitenkanten senkrecht zur Oberkante und zur Unterkante angeordnet sind. Die Oberund Unterkante haben dann die gleiche Länge und beide Seitenkanten haben die gleiche Höhe.

Um die offenen Seiten an der Vorder- und Rückseite handelsüblicher Rollbehälter besonders vollflächig abdecken zu können ist es vorteilhaft, wenn die Ober- und Unterkante eine Länge von 500 - 800 mm, vorzugsweise 600 - 650 mm aufweisen. Der gleiche Effekt wird erzielt, wenn die Seitenkanten eine Höhe von 1200 - 1700 mm, vorzugsweise 1200 - 1400 mm, aufweisen. Dadurch kann die Transportsicherung mit unterschiedlichen Modellen gängiger Rollpaletten verwendet werden.

Wenn die Größe der Transportsicherung geringfügig kleiner ist als die offene Seite, wird eine einfache Handhabung und gleichzeitig eine sichere Abdeckung der offenen Seite erreicht.

Die Sicherungsplatte kann verwindungssteif ausgebildet sein um eine einfache Handhabung zu ermöglichen. Beispielsweise kann die Sicherungsplatte als Strukturkammerplatte ausgebildet sein. Die Sicherungsplatte kann bevorzugt aus Polypropylen hergestellt sein.

Um eine gleichmäßige Belastung des oberen Gurts zu gewährleisten, kann vorgesehen sein, dass die oberen Befestigungselemente derart angeordnet sind, dass der obere Gurt parallel zur Oberkante geführt ist.

Die oberen Befestigungselemente können als durchgehende Ausnehmungen, insbesondere Ausstanzungen, ausgebildet sein. Wenn ein kreuzförmiges oder T-förmiges, parallel zu den Kanten ausgerichtetes erstes oberes Befestigungselement vorgesehen ist, kann ein Zurückschnalzen des Gurtes beim Lösen der reversiblen Verbindung vermieden werden, wenn das reversibel verbindbare erste Ende des Gurtes durch das kreuzförmige oder T-förmige Befestigungselement gezogen ist. Durch ein schlitzförmiges parallel zu den Seitenkanten ausgerichtetes zweites oberes Befestigungselement kann eine gleichmäßigere und reduzierte mechanische Belastung auf den Gurt erreicht werden.

Zur Befestigung des unteren Befestigungsmittels an der Sicherungsplatte können auch ein erstes unteres Befestigungselement und ein zweites unteres Befestigungselement vorgesehen sein. Besonders vorteilhaft ist die Ausführung der unteren Befestigungselemente als durchgehende Ausnehmungen, insbesondere Ausstanzungen. Die Transportsicherung kann besonders einfach an einem Rollwagen befestigt werden, wenn in dem unteren Befestigungselement ein unteres Befestigungsmittel vorgesehen ist. Das erste untere Befestigungselement kann bei einer Transportsicherung mit einem unteren Gurt als Befestigungsmittel kreuzförmig oder T-förmig ausgebildet sein. Das zweite untere Befestigungselement, das ebenfalls zur Befestigung des Befestigungsmittels vorgesehen sein kann, kann ebenfalls schlitzförmig ausgeführt sein.

Wenn nur ein unteres Befestigungselement vorgesehen ist, so ist dieses vorzugsweise auf der gleichen Seite der Sicherungsplatte angeordnet wie das zweite obere Befestigungselement, um bei Befestigung der Sicherungsplatte an einem Rollwagen eine Drehbarkeit der Sicherungsplatte zu ermöglichen. Als unteres Befestigungsmittel kann dann beispielsweise ein mit sich selbst verbindbares, vorzugsweise längenverstellbares und/oder reversibel nicht lösbares, Band vorgesehen sein. Besonders bevorzugt ist ein Kabelbinder vorgesehen.

Für Ausführungsformen, die keinen mit beiden Seitenwänden verbindbaren Gurt als unteres Befestigungsmittel vorsehen, kann im ersten unteren Befestigungselement ein unteres Zusatzfixiermittel angeordnet werden, um die Transportsicherung weiter zu stabilisieren. Das Zusatzfixiermittel kann vorteilhafterweise reversibel lösbar ausgebildet sein.

Für eine Transportsicherung mit einem unteren Zusatzfixiermittel, beispielsweise mit einem Klettverschluss, einer Schnur mit Klemme oder einer Schnur mit Blockierelement, kann das erste untere Befestigungselement ebenfalls schlitzförmig ausgebildet sein. Wenn ein unteres Befestigungsmittel und ein unteres Zusatzfixiermittel bzw. ein weiteres unteres Befestigungsmittel vorgesehen sind, ist die Transportsicherung besonders stabil, wenn beide undehnbar bzw. unelastisch ausgebildet sind. Dadurch kann die Transportsicherung noch stabiler an einem Rollwagen befestigt werden. Um eine Drehung um eine zur Befestigung der Transportsicherung verwendeten Befestigungsstange des Rollwagens zu ermöglichen, kann vorgesehen sein, dass das untere Befestigungsmittel mit geringem Spiel an der Stange befestigt ist. Die Länge des Befestigungsmittels und des unteren Zusatzfixiermittels kann so gewählt sein, dass sie in gespreiztem Zustand der Seitenwände nahezu gespannt sind, während sie in ungespreiztem Zustand der Seitenwände etwas lockerer angeordnet sind. Da der Abstand der Seitenwände beim Aufspreizen im unteren Bereich nur geringfügig vergrößert wird, wird die Stabilität der Transportsicherung dadurch nicht beeinträchtigt.

Um einen Austausch der unteren Befestigungsmittel zu ermöglichen, kann auch sowohl eine durchgängige kreuz- oder T- förmige Ausnehmung, als auch eine durchgängige schlitzförmige Ausnehmung als erstes unteres Befestigungselement vorgesehen sein.

Die unteren Befestigungselemente weisen vorzugsweise den gleichen Abstand zur Unterkante der Sicherungsplatte auf, so dass der Gurt parallel zum oberen Gurt geführt ist, bzw. so dass die mit gleichem Abstand zur Unterkante der Sicherungsplatte angeordnet werden können. Dadurch wird eine gleichmäßige Belastung der Sicherungsplatte erreicht.

Besonders vorteilhaft ist es, wenn die oberen, und gegebenenfalls die unteren Befestigungselemente spiegelsymmetrisch zu einer parallel zu den Seitenkanten verlaufenden Längsachse der Sicherungsplatte ausgebildet sind, wobei auf jeder Seite der Längsachse ein kreuz- oder T- förmiges und ein schlitzförmiges Befestigungselement vorgesehen sind. Dadurch kann die Transportsicherung in beliebiger Position befestigt werden.

Eine rasche und einfache Handhabung ist auch möglich, wenn der obere Gurt an einem ersten Ende ein erstes Verbindungselement zur reversiblen Verbindung mit einer der Seitenwände des Rollbehälters aufweist, wobei insbesondere vorgesehen ist, dass das erste Verbindungselement als Haken zum Einhaken in die Seitenwand ausgebildet ist.

Die Transportsicherung ist besonders stabil und langlebig, wenn das erste Verbindungselement bzw. der Haken, aus Metall gefertigt ist. Besonders stabil und kostengünstig ist ein Haken aus Stahldraht. Um ein Verrutschen entlang der Stange der Seitenwand zu vermeiden, kann vorgesehen sein, dass der Haken mit einem rutschhemmenden Kunststoffüberzug überzogen ist.

Besonders stabil ist die Verbindung zum Rollbehälter, wenn als unteres Befestigungsmittel ein unterer, insbesondere elastisch dehnbarer, Gurt vorgesehen ist, wobei der untere Gurt an einem ersten Ende ein erstes Verbindungselement zur reversiblen Verbindung mit einer der Seitenwände des Rollbehälters aufweist.

An dem anderen Ende der Gurte kann zur Verbindung der Transportsicherung mit dem Rollbehälter eine Öse vorgesehen sein, die zur Ausbildung einer Schlaufe verwendet werden kann. Die Öse ist vorteilhafterweise ebenfalls aus Metall, insbesondere aus Stahldraht. Auch bei häufigem Gebrauch kann ein Abbrechen der Verbindungselemente dadurch vermieden werden.

Um eine besonders rasche und einfach Verbindung der Transportsicherung mit dem Rollbehälter zu erreichen, kann daher vorgesehen sein, dass die Transportsicherung durch zwei Gurte jeweils mit der ersten und der zweiten Seitenwand verbindbar bzw. verbunden ist, wobei die Gurte zumindest an einem Ende ein Hakenelement zur Verbindung mit einer der Seitenwände aufweisen und am anderen Ende eine Öse zur Ausbildung einer Schlaufe um eine Stange der anderen Seitenwand aufweisen.

Es kann vorteilhafterweise auch vorgesehen sein, dass an beiden Enden eines Gurtes Hakenelemente bzw. jeweils ein Hakenelement vorgesehen sind, so dass die Transportsicherung rasch und einfach an einem Rollwagen befestigt werden kann und ebenso rasch wieder von dem Rollwagen abgenommen werden kann.

Die Befestigung der Transportsicherung an einem Rollwagen ist besonders einfach, wenn zumindest der obere Gurt elastisch dehnbar ist, wobei der Gurt um einen Faktor von 25 bis 100 %, insbesondere 40 - 60 %, gedehnt werden kann, also einen Dehnungsfaktor von 25 - 100 %, insbesondere von 40 - 60 %, vorzugsweise 45%, aufweist. Diese Angaben beziehen sich auf den elastischen Bereich des Gurtes, also auf die Länge des Gurtes abzüglich der Länge der Verbindungselemente.

Durch diese Elastizität des Gurts wird eine Aufspreizung zur automatischen Beladung erleichtert und eine leichte Handhabung bei der Befestigung, beispielsweise durch Einhaken in die Seitenwand. Gleichzeitig wird eine ausreichende Stabilität zur Sicherung der Waren erzielt. Der Gurt kann dabei in den Befestigungselementen derart geführt sein, dass zumindest eine durch elastische Dehnung verursachte Bewegung relativ zur Sicherungsplatte ermöglicht ist.

Eine besonders stabile Sicherung der Waren und eine einfache Handhabung kann erzielt werden, wenn das Verhältnis zwischen der Länge der Unterkante und der Länge des oberen Gurts in ungedehntem Zustand 0,9 : 1 bis 1,3 : 1 beträgt. In diesem Fall wird als Länge des oberen Gurts die gesamte Länge inklusive der Verbindungselemente zugrunde gelegt.

Es ist besonders vorteilhaft, wenn der obere Gurt, bzw. die Gurte, in ungedehntem Zustand eine Länge von 350 - 600 mm, insbesondere 370 - 550 mm, aufweist und in gedehntem Zustand eine Länge von 600 - 850 mm, vorzugsweise 840 mm, aufweist.

Eine gute Elastizität und Haltbarkeit wird beispielsweise erreicht, wenn der Gurt Naturkautschuk enthält, insbesondere ausschließlich aus Naturkautschuk besteht. Ein besonders haltbarer Gurt kann auch zur Verfügung gestellt werden, wenn der Gurt aus einem Mischgewebe aus einem festen Textil und einem elastischen Material besteht.

Um die Transportsicherung während der Beladung oder der Lagerung stabil am Rollbehälter anordnen zu können, kann vorgesehen sein, dass an der Sicherungsplatte ein Magnetelement, beispielweise ein Magnetband, derart angeordnet ist, dass die Sicherungsplatte parallel zu einer Seitenwand des Rollbehälters anordenbar ist. Der Magnet kann dann mit der metallischen Seitenwand eines handelsüblichen Rollbehälters zusammenwirken und die Transportsicherung stabilisieren.

Erfindungsgemäß ist weiters ein Rollbehälter, insbesondere eine Rollpalette, mit einer Bodenplatte, wobei an der Unterseite der Bodenplatte Rollen angeordnet sind, wobei an der den Rollen abgewandten Oberseite der Bodenplatte seitlich eine erste Seitenwand und eine der ersten Seitenwand gegenüberstehende zweite Seitenwand angeordnet sind, wobei zwischen der ersten und der zweiten Seitenwand zumindest eine zuvor beschriebene Transportsicherung zur Abdeckung einer weiteren, offenen Seite vorgesehen ist.

Ein solcher Rollbehälter ist für den Einsatz in automatischen Beladungssystemen ebenso geeignet wie für die manuelle Beladung. Die Handhabung ist besonders rasch und einfach möglich.

Um die Beladung des Rollbehälters zu vereinfachen, kann vorgesehen sein, dass die erste und zweite Seitenwand reversibel spreizbar sind, wobei insbesondere vorgesehen ist, dass in gespreiztem Zustand der Abstand zwischen den Seitenwänden am oberen, der Bodenplatte abgewandten Ende der Seitenwände größer ist als am unteren mit der Bodenplatte verbundenen Ende der Seitenwände.

Die Waren können besonders gut gesichert werden, wenn zwei Transportsicherungen vorgesehen sind. Dabei ist die Handhabung eines Rollbehälters besonders einfach, wenn zwei gleichartige Transportsicherungen vorgesehen sind.

Besonders einfach ist die Handhabung eines Rollbehälters, wenn die Seitenwände an den Eckbereichen der Bodenplatte nach oben ragende Stangen aufweisen, wobei der obere Gurt an seinem ersten Ende durch das erste Verbindungselement reversibel mit einander diagonal gegenüberliegenden Verbindungsstangen verbindbar ist und mit seinem zweiten Ende an der im dazwischenliegenden Eckbereich angeordneten Befestigungsstange befestigt ist, insbesondere durch eine die Befestigungsstange umgebende Schlaufe. In diesem Fall kann die Transportsicherung zur Abdeckung der offenen Seitenwand zwischen den Seitenwänden angeordnet werden und zur Beladung oder Lagerung entlang einer Seitenwand angeordnet werden. Die Transportsicherung kann dann, wie eine Tür, durch Drehen bzw. Verschwenken um die Befestigungsstange geöffnet oder geschlossen werden.

Eine rasche und stabile Sicherung der Waren kann erreicht werden, wenn das Verbindungselement des oberen Gurts formschlüssig mit den Verbindungsstangen verbindbar ist. Dies kann besonders einfach erreicht werden, wenn das Verbindungselement die Verbindungsstange zumindest teilweise umgreifend anordenbar ist.

Es kann weiters vorgesehen sein, dass an dem Verbindungselement ein Verschlusselement angeordnet ist, wobei das Verschlusselement, insbesondere lösbar, mit den Verbindungselementen verbunden ist. Das Verschlusselement ist vorzugsweise derart ausgebildet, dass ein Verrutschen des Verbindungselements entlang der Stange der Seitenwand vermieden wird. Um die auf dem Rollbehälter transportierten Waren gegen Diebstahl zu schützen, kann das Verschlusselement mit einem Schloss reversibel abschließbar sein, wobei das Schloss insbesondere mit einem Zahlencode oder Schlüssel gesichert werden kann.

Zur Befestigung der Transportsicherung an der Befestigungsstange kann die Schlaufe beispielsweise dadurch bereitgestellt werden, dass am zweiten Ende des Gurts eine Öse, insbesondere aus Metall, vorzugsweise aus Stahldraht vorgesehen ist. Dadurch ist die Verbindung besonders langlebig und stabil.

An der Schlaufe kann eine Diebstahlsicherung angebracht werden, um ein unerlaubtes Entfernen des Gurts vom Rollbehälter zu vermeiden. Beispielsweise kann dazu an der Schlaufe ein Steckknopf angebracht sein, der durch ein Loch des Spanngurtes gesteckt werden kann und auf der Gegenseite gesichert werden kann, z.B. mit einer Schraube. Dadurch wird das Entfernen des Gurts erschwert.

Das Entfernen der Transportsicherung kann auch vermieden werden, wenn das untere Befestigungsmittel mit der Sicherungsplatte und mit der Befestigungsstange unlösbar, verbunden ist. Besonders bevorzugt ist ein Kabelbinder als unteres Befestigungsmittel. Weiters kann insbesondere vorgesehen sein, dass als unteres Befestigungsmittel ein, vorzugsweise durch Verkleben oder Tackern unlösbar verbundener, Klettverschluss vorgesehen ist.

Ein Klettverschluss ist als unteres Befestigungsmittel besonders geeignet, da eine stabile Verbindung ermöglicht wird, die auf einfache Weise so eingestellt werden kann, dass die Transportsicherung am Rollbehälter in der gewünschten Position vor der offenen Seite befestigt werden kann und gleichzeitig die für die automatische Beladung und das Drehen um die Befestigungsstange erforderliche Beweglichkeit erreicht wird.

Um die Stabilität der Transportsicherung bei der Abdeckung der offenen Seite zu erhöhen, kann ein unteres Zusatzfixiermittel vorgesehen sein, wobei das weitere untere Befestigungsmittel bzw. das untere Zusatzfixiermittel mit der Sicherungsplatte und mit den Verbindungsstangen reversibel verbindbar ist.

In einigen Lagersystemen ist eine automatische Erkennung leerer Rollbehälter vorgesehen, die durch eine Erfassung von Waren auf der Bodenplatte erfolgt. Es ist in diesen Systemen vorteilhaft, wenn die Transportsicherung von der Bodenplatte beanstandet ist, wobei insbesondere vorgesehen ist, dass der Abstand der Unterkante der Sicherungsplatte zur Bodenplatte 150 - 200 mm beträgt. In diesem Fall ist es besonders vorteilhaft, wenn das untere Befestigungselement bzw. das untere Befestigungsmittel möglichst knapp an der Unterkante angeordnet ist. Für derartige Systeme ist es besonders vorteilhaft, wenn ein weiteres unters Befestigungsmittel bzw. ein Zusatzfixiermittel vorgesehen ist.

Eine rasche Befestigung und Lösung des unteren Zusatzfixiermittels und damit eine einfache Handhabung wird erreicht, wenn das untere Zusatzfixiermittel ebenfalls als Klettverschluss ausgebildet ist.

Der selbe Effekt kann erreicht werden, wenn das weitere untere Befestigungsmittel bzw. das Zusatzfixiermittel als Schnur mit verstellbarer Klemme oder als Schnur mit Blockierelement ausgebildet ist.

Ein Rollbehälter mit einer besonders stabilen Abdeckung kann bereitgestellt werden, wenn ein unterer Gurt vorgesehen ist, wobei der untere Gurt mit seinem zweiten Ende an der Befestigungsstange, insbesondere durch eine die Befestigungsstange umgebende Schlaufe, befestigt ist, und an seinem ersten Ende durch das Verbindungselement reversibel mit den Verbindungsstangen verbindbar ist.

Die Stabilität kann weiter erhöht werden, wenn an der offenen Seite am Rand der Bodenplatte ein Blockierelement, insbesondere eine Schraube oder Kabelbinder, vorgesehen ist. Das Blockierelement kann beispielsweise durch ein in der Bodenplatte vorhandenes Loch gesteckt bzw. geführt werden. Dies erhöht die Stabilität bei einer bis zur Bodenplatte reichenden Transportsicherung. Ein weiteres unteres Befestigungselement ist in diesem Fall nicht notwendig, kann aber zusätzlich vorgesehen sein.

Besonders vorteilhaft ist eine Ausführungsform, die als unteres Befestigungsmittel einen Kabelbinder aufweist und als Blockierelement ebenfalls einen an der Bodenplatte angeordneten Kabelbinder, der so ausgebildet und angeordnet ist, dass ein Verschwenken der Platte blockiert wird. Kabelbinder sind besonders haltbar, können rasch und einfach in der gewünschten Länge angebracht werden und sind kostengünstig erhältlich. Falls eine erhöhte Stabilität gewünscht ist, kann als unteres Zusatzfixiermittel in dieser bevorzugten Ausführungsform eine, wenig bis gar nicht elastische, Schnur mit Klemme vorgesehen sein, da diese ebenfalls rasch anzubringen und in der gewünschten Länge einstellbar ist.

Besonders vorteilhafte Ausführungsformen der Erfindung sind anhand der folgenden Zeichnungen ohne Einschränkung des allgemeinen erfinderischen Gedankens beispielhaft dargestellt.
Fig. 1 zeigt einen beispielhaften Rollbehälter mit zur Beladung gespreizten Seitenwänden mit einer beispielhaften Transportsicherung.
Fig. 2 zeigt den Rollbehälter aus Fig. 1 in einer Schrägansicht mit entlang der Seitenwände angeordneten Transportsicherungen.
Fig. 3 zeigt die Verschwenkung der Seitenwände einer beispielhaften Transportsicherung in eine Lagerposition.
Fig. 4 zeigt die Verschwenkung der Seitenwände einer beispielhaften Transportsicherung in eine Be- und Entlade-Position.
Fig. 5 zeigt eine Sicherungsplatte einer beispielhaften Transportsicherung.
Fig. 6 zeigt als alternatives unteres Befestigungsmittel einen Klettverschluss.
Fig. 7 zeigt als unteres Zusatzfixiermittel eine Schnur mit einem Blockierelement.
Fig. 8 zeigt als alternatives unters Zusatzfixiermittel eine Schnur mit einer Klemme.
Fig. 9 zeigt eine alternative Sicherungsplatte einer beispielhaften Transportsicherung.
Fig. 10 zeigt eine weitere Alternative einer beispielhaften Transportsicherung.
Fig. 11 zeigt noch eine weitere Alternative einer beispielhaften Transportsicherung.

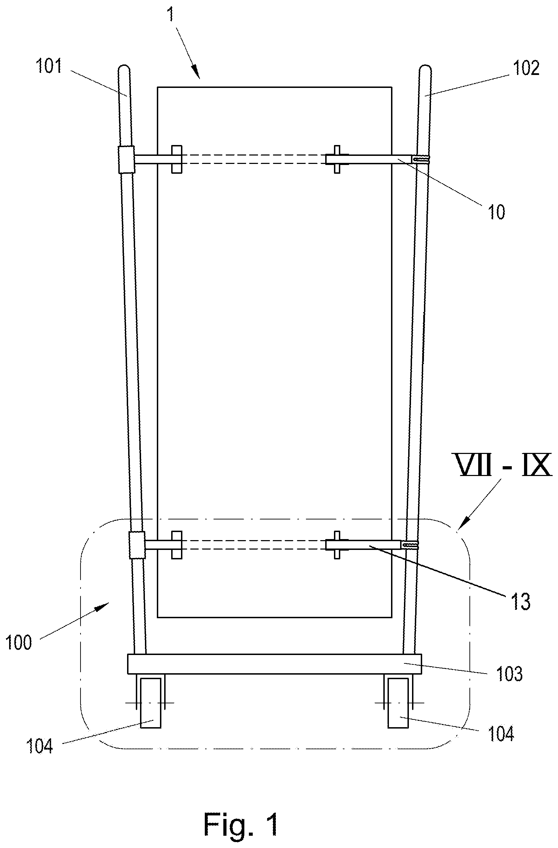

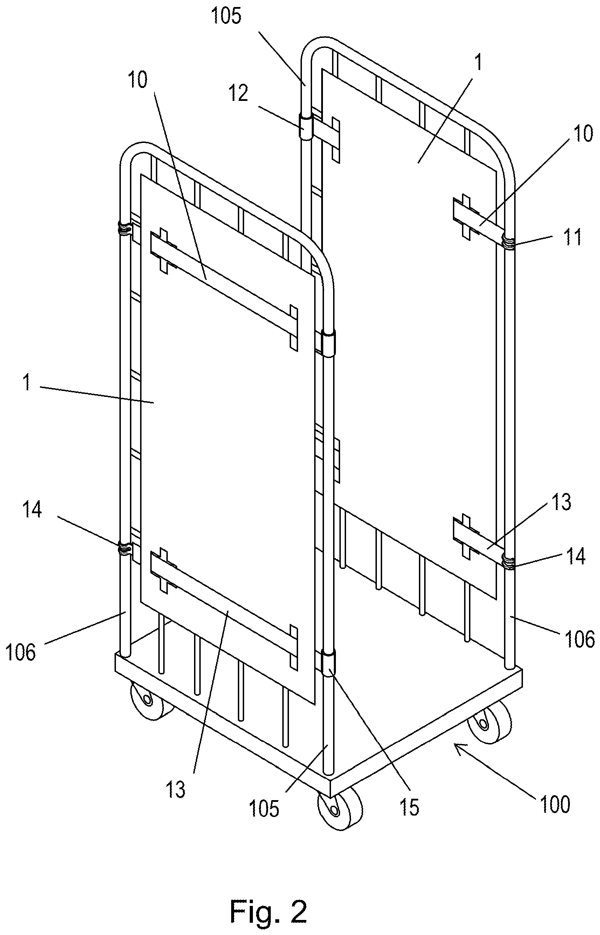

Fig. 1 und Fig. 2 zeigen einen beispielhaften Rollbehälter 100 mit einer Bodenplatte 103, die an ihrer Unterseite Rollen 104 aufweist und an ihrer Oberseite eine erste Seitenwand 101 und eine zweite Seitenwand 102. In der dargestellten Ausführungsform sind die Seitenwände 101, 102 zur Beladung gespreizt. Der Abstand zwischen den Stangen 105, 106 der ersten Seitenwand 101 und den Stangen 105, 106 der zweiten Seitenwand 102 ist dadurch an dem der Bodenplatte 103 abgewandten oberen Ende der Seitenwände 101, 102 vergrößert, sodass der Abstand zwischen der ersten Seitenwand 101 und der zweiten Seitenwand 102 am oberen Ende größer ist als am unteren Ende.

In der dargestellten Ansicht ist die zwischen den Seitenwänden 101 und 102 gelegene weitere Seite von einer Sicherungsplatte 1 einer beispielhaften Transportsicherung weitestgehend abgedeckt. Eine Beladung des Rollbehälters 100 ist von der nicht sichtbaren, geöffneten Rückseite aus möglich.

Die Sicherungsplatte 1 weist im oberen Bereich zwei Befestigungselemente 6, 7 auf, die als durchgehende Ausnehmungen, insbesondere als Ausstanzungen, ausgeführt sind. In den oberen Befestigungselementen 6, 7 ist ein oberer elastischer Gurt 10 geführt, der mit der ersten Seitenwand 101 und der zweiten Seitenwand 102 verbunden ist. In der dargestellten Ausführungsform ist der obere Gurt 10 durch die Verspreizung der Seitenwände 101, 102 gedehnt.

Im unteren Bereich der Sicherungsplatte 1 ist ein unteres Befestigungsmittel vorgesehen. In der dargestellten Ausführungsform ist das untere Befestigungsmittel ein unterer Gurt 13, der in unteren Befestigungselementen 8, 9 geführt ist. Die unteren Befestigungselemente 8, 9 sind in der dargestellten Ausführungsform ebenfalls Ausstanzungen.

In der dargestellten Ausführungsform sind jeweils ein kreuzförmiges erstes Befestigungselement 6, 8 und ein schlitzförmiges zweites Befestigungselement 7, 9 zur Führung der Gurte 10, 13 vorgesehen.

Die oberen Befestigungselemente 6, 7 ermöglichen eine Bewegung des oberen Gurts 10 relativ zur Sicherungsplatte 1, insbesondere ist eine durch die elastische Dehnung des oberen Gurtes 10 verursachte Bewegung ermöglicht. Ebenso ist durch die unteren Befestigungselemente 8, 9, die ebenfalls als durchgehende Ausnehmungen ausgeführt sind, eine Bewegung des unteren Gurts 13 relativ zur Sicherungsplatte 1 ermöglicht. Beim Verspreizen der Seitenwände 101, 102 kommt es daher nicht zu einer Zugbelastung auf die Sicherungsplatte 1, sondern es werden nur die Gurte 10, 11 gedehnt.

Fig. 2 zeigt einen Rollbehälter 100 in Schrägansicht mit zwei zurückgespannten Transportvorrichtungen. Bei dem dargestellten Rollbehälter 100 handelt es sich um eine in Supermärkten gebräuchliche Rollpalette. Der Rollbehälter 100 weist eine Bodenplatte 103 auf, an deren Unterseite Rollen 104 angeordnet sind. Auf der den Rollen 104 gegenüberliegenden Oberseite sind eine erste Seitenwand 101 und eine zweite Seitenwand 102 angeordnet. Die Seitenwände 101, 102 sind randständig auf der Bodenplatte 103 angeordnet, sodass die Seitenwände 101, 102 einander parallel gegenüberstehen. Die Seitenwände 101, 102 weisen jeweils zwei in den Eckbereichen der Bodenplatte 103 angeordnete Stangen 105, 106 auf, wobei die Stangen 105, 106 an ihrem oberen, der Bodenplatte 103 abgewandten, Ende bogenförmig verbunden sind. Zwischen den Stangen 105, 106 einer Seitenwand 101, 102 ist jeweils ein Gitter angeordnet, sodass zwischen den Stangen 105, 106 einer Seitenwand 101, 102 Querverstrebungen verlaufen.

An dem Rollbehälter 100 sind zwei Transportsicherungen angebracht, die entlang der Seitenwände 101, 102 angeordnet sind. Die Transportsicherungen weisen jeweils eine Sicherungsplatte 1 auf, in denen obere Befestigungselemente 6, 7 zur Führung eines oberen Gurtes 10 und untere Befestigungselemente 8, 9 zur Führung eines unteren Gurtes 13 vorgesehen sind. Die Sicherungsplatte 1 ist jeweils über den oberen Gurt 10 und den unteren Gurt 13 an dem Rollbehälter 100 befestigt. Dabei ist jeweils ein erstes Ende des Gurtes 10, 13 durch ein erstes Verbindungselement 11, 14, das in der dargestellten Ausführungsform ein Haken, insbesondere ein Metallhaken ist, mit einer Verbindungsstange 106 verbunden. Diese Verbindung des Verbindungselements 11, 14 ist reversibel lösbar, da der Haken an der Verbindungsstange 106 ein- und ausgehängt werden kann und derart die Verbindungsstange 106 formschlüssig umgreifend anordenbar ist.

Das jeweils zweite Ende der Gurte 10, 13 ist an als Befestigungsstangen 105 dienenden Stangen drehbar befestigt. In der dargestellten Ausführungsform sind die Befestigungsstangen 105 diagonal gegenüberliegend angeordnet und die Verbindungsstangen 106 sind ebenfalls diagonal gegenüberliegend angeordnet, wobei die ersten Enden der Gurte 10, 13 jeweils mit beiden Verbindungsstangen 106 verbindbar sind. In der dargestellten Ausführungsform sind die Gurte 10, 13 so angeordnet, dass bei einer Anordnung entlang der Seitenwände 101, 102 die Haken von der Innenseite des Rollbehälters 100 aus an der Verbindungsstange 106 eingreifen, und bei Abdeckung der offenen Seite von außen eingreifen. Dadurch wird die Handhabung der Verbindungselemente 11, 14 vereinfacht. In der dargestellten Ausführungsform sind die Haken 80 mm lang und haben einen Durchmesser von 22 mm.

Um ein Zurückschnalzen des Gurtes 10, 13 zu vermeiden, ist das Befestigungselement 6, 8, das dem ersten Verbindungselement 11, 14 zugewandt ist, jeweils kreuzförmig ausgebildet, bzw. ist der Gurt 10, 13 mit seinem ersten Ende durch das kreuzförmige erste Befestigungselement 6, 8 geführt.

Das dem zweiten Ende des Gurtes 10, 13 zugewandet zweite Befestigungselement 7, 9 ist jeweils schlitzförmig ausgebildet.

An dem zweiten Ende jedes Gurtes 10, 13 ist dieser mit einer der Befestigungsstangen 105 verbunden, wobei dazu der Gurt 10 die Stange 105 umgreifend angeordnet wird und durch eine am Ende des Gurtes 10 vorgesehene Öse gezogen wird, sodass jeweils eine Schlaufe als zweites Verbindungselement 12, 15 ausgebildet ist.

In der dargestellten Ausführungsform sind die Gurte 10, 13 aus einem Mischgewebe aus festem Textil und elastischen Fasern. Die Gurte 10, 13 weisen ungedehnt eine Länge von 500 mm auf und in gedehntem Zustand 800 mm. Die Gurte 10, 13 haben in der dargestellten Ausführungsform eine Höhe von 48 mm und eine Dicke von 1,8 mm. Die maximale Ziehkraft beträgt in der dargestellten Ausführungsform 100 NM.

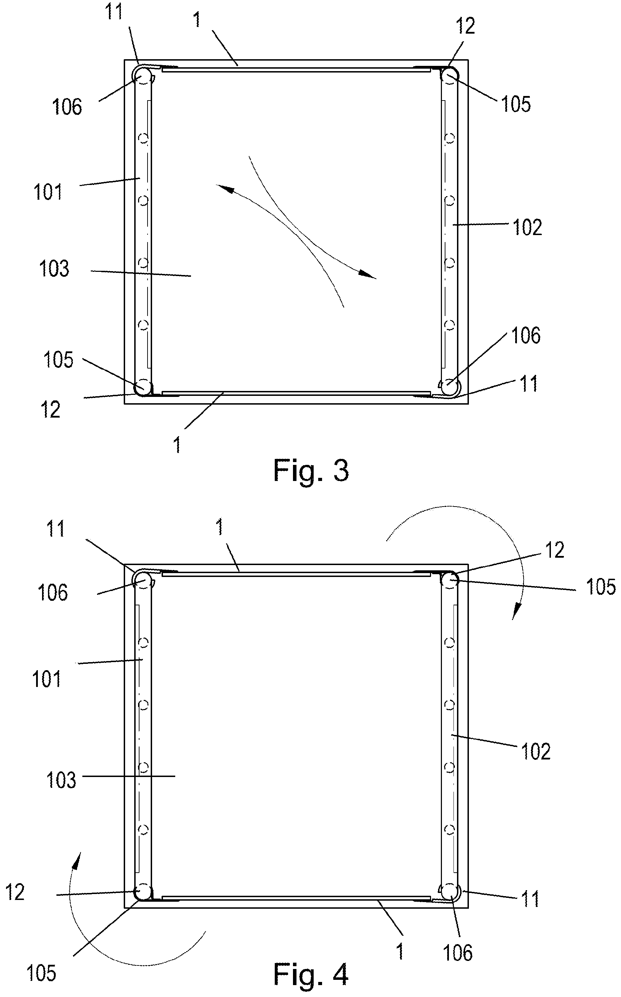

Fig. 3 zeigt die Anordnung der Transportsicherung in einer Lagerposition. Die Sicherungsplatte 1 ist durch das Verschwenken um die Befestigungsstange 105 im Innenraum des Rollbehälters 100 entlang der Seitewand 101 angeordnet.

Fig. 4 zeigt die Anordnung der Transportsicherung in einer Be- bzw. Entlade-Position. Die Sicherungsplatte 1 ist durch das Verschwenken um die Befestigungsstange 105 auf der Außenseite der Seitenwand 101 entlang der Seitenwand 101 angeordnet. Durch Drehen um die Befestigungsstange 105 kann die Transportsicherung nach dem Beladen geschlossen werden und an der diagonal gegenüberliegenden Verbindungsstange 106 eingehakt werden. Nach dem Entladen kann die Transportsicherung auf die Innenseite des Rollbehälters 100 gedreht werden und wieder in der gleichen Verbindungsstange 106 eingehakt werden, wie dies in Fig. 3 gezeigt ist.

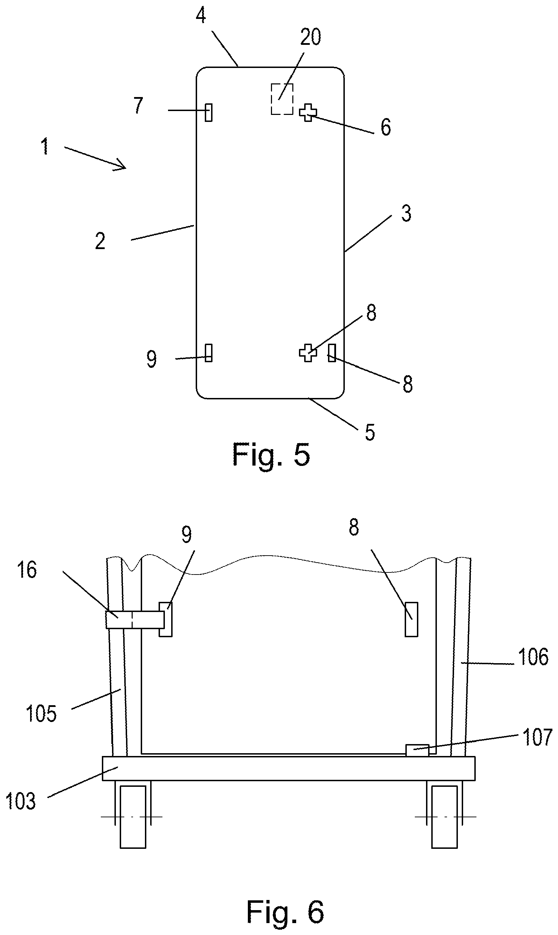

Fig. 5 zeigt eine Sicherungsplatte 1 für eine Transportsicherung. Die Sicherungsplatte 1 ist in der dargestellten Ausführungsform eine Strukturkammerplatte aus Polypropylen. Um scharfkantige Ränder zu vermeiden, kann die Strukturkammerplatte an den Rändern zusammengepresst und, insbesondere durch Erwärmen, abgerundet werden. Dadurch kann auch ein Eindringen von Fremdkörpern oder Flüssigkeiten in das Innere der Strukturkammerplatte vermieden werden. Die Sicherungsplatte hat eine Oberkante 4 und eine Unterkante 5, die parallel zueinander verlaufen und in der dargestellten Ausführungsform eine Länge von 600 mm aufweisen. Die Seitenkanten 2, 3 der Sicherungsplatte 1 sind senkrecht zur Ober- und Unterkante 4, 5 angeordnet und weisen in der dargestellten Ausführungsform eine Höhe von 1400 mm auf. Die Ecken sind jeweils abgerundet.

In einer nicht dargestellten Ausführungsform könnte die Länge der Ober- und Unterkante auch zwischen 500 und 800 mm aufweisen. Die Höhe der Seitenkanten könnte zwischen 1200 und 1700 mm betragen.

Die Sicherungsplatte 1 weist im oberen Bereich zwei Befestigungselemente 6, 7 auf, wobei das erste obere Befestigungselement kreuzförmig ausgebildet ist. Dabei sind die überkreuzten Schlitze jeweils 50 mm lang. Der parallel zu den Seitenkanten 2, 3 angeordnete Schlitz weist eine Breite von 2,5 mm auf, der parallel zu der Ober- und Unterkante 4, 5 angeordnete Schlitz weist eine Höhe von 10 mm auf.

Das zweite obere Befestigungselement 7 ist schlitzförmig ausgebildet. Der Schlitz hat eine Höhe von 68 mm und eine Breite von 15 mm und ist parallel zu den Seitenkanten 2, 3 angeordnet.

Weiters weist die Sicherungsplatte 1 im unteren Bereich Befestigungselemente 8, 9 auf. Dabei sind als erstes unteres Befestigungselement 8 eine kreuzförmige Öffnung und eine schlitzförmige Öffnung vorgesehen. Dadurch kann die Sicherungsplatte 1 mit unterschiedlichen Befestigungsmitteln und/oder Zusatzfixiermitteln verwendet werden. Das zweite untere Befestigungselement 9 ist schlitzförmig ausgebildet. Die unteren Befestigungselemente 8, 9 weisen in der dargestellten Ausführungsform die gleichen Maße auf, wie die oberen Befestigungselemente 6, 7.

Um die Anordnung der Sicherungsplatte 1 entlang der Seitenwände 101, 102 zu erleichtern, ist an der Sicherungsplatte 1 ein Magnet 20 vorgesehen, der eine Befestigung an dem metallischen Gitter der Seitenwände 101, 102 ermöglicht. In der dargestellten Ausführungsform hat der Magnet 20 eine Größe von 200 mm * 30 mm und weist eine Zugkraft von 1 bis 2 kg auf.

In Fig. 6 bis Fig. 8 ist ein alternatives unteres Befestigungsmittel gezeigt. Dabei ist ein Klettverschluss 16 als unteres Befestigungsmittel vorgesehen. In einer, in den Figuren nicht dargestellten, vorteilhaften Ausführungsform kann das untere Befestigungsmittel auch ein Kabelbinder 16 sein, wobei der Kabelbinder 16 mit Spiel um die Stange angeordnet ist. Das untere Befestigungsmittel ist durch das zweite untere Befestigungselement 9 und um die Befestigungsstange 105 geführt und mit sich selbst verbunden. In der dargestellten Ausführungsform ist diese Verbindung nicht lösbar, da der Klettverschluss 16 mit sich selbst verklebt ist.

Fig. 6 zeigt zusätzlich ein an der Bodenplatte 103 angeordnetes Blockierelement 107. In der dargestellten Ausführungsform ist als Blockierelement 107 eine Schraube vorgesehen, die am Rand der Bodenplatte 103 so in die Bodenplatte 103 geschraubt ist, dass der Kopf ein Verrutschen bzw. Verschwenken der Transportsicherung von der Bodenplatte 103 vermeiden kann. Alternativ ist ein, hier nicht dargestelltes, Blockierelement 107 in Form eines durch ein Loch in der Bodenplatte durchgeführten Kabelbinders 16 möglich.

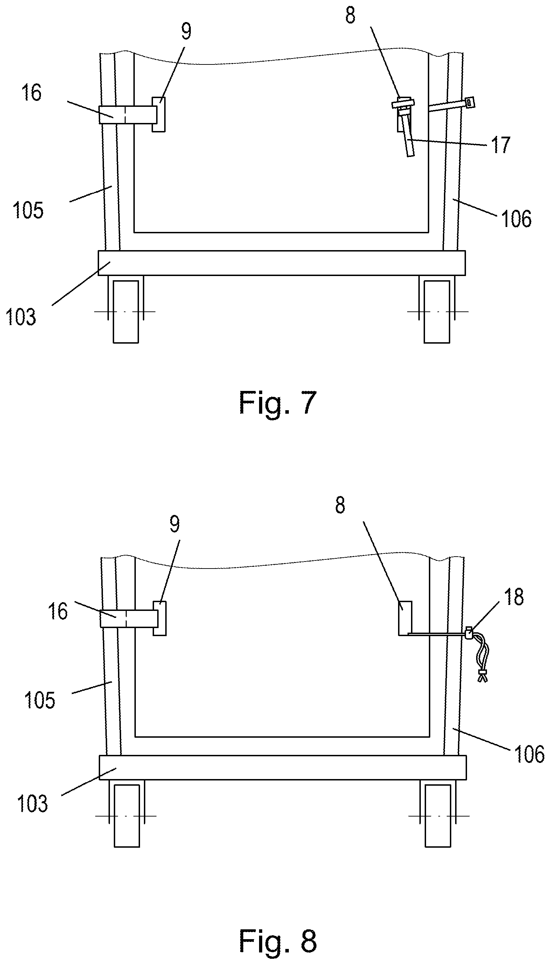

Fig. 7 zeigt zusätzlich ein unteres Zusatzfixiermittel, das eine lösbare Verbindung zwischen der Transportsicherung und der Verbindungsstange 106 ermöglicht, wobei eine Schnur mit Blockierelement 17 vorgesehen ist. Das Blockierelement 17 kann durch das in dieser Anordnung ebenfalls schlitzförmige erste untere Befestigungselement 8 geführt werden und durch Verdrehen des Blockierelements 17 verbunden werden.

Fig. 8 zeigt ein alternatives, durch das erste untere Befestigungselement 8 geführtes, unteres Zusatzfixiermittel, das eine lösbare Verbindung zwischen der Transportsicherung und der Verbindungsstange 106 ermöglicht, wobei eine Schnur mit verstellbarer Klemme 18 vorgesehen ist. In dieser Anordnung ist das erste untere Befestigungselement 8 schlitzförmig ausgebildet.

Die gezeigte Transportsicherung ermöglicht eine stabile Sicherung der Waren auf einem Rollcontainer, wobei eine automatische Beladung ermöglicht ist und eine rasche und einfache Handhabung während der Be- und Entladung.

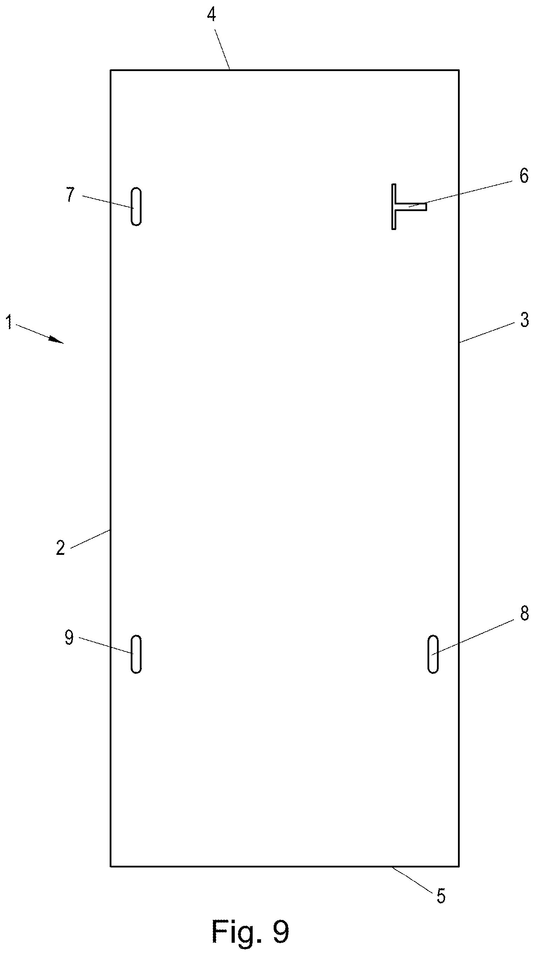

Eine weitere vorteilhafte Ausführungsform der Sicherungsplatte 1 ist in Fig. 9 gezeigt. Die Sicherungsplatte 1 ist hier in Draufsicht ohne eingesetzte Gurte 10, 13 und ohne untere Befestigungsmittel 13, 16 dargestellt.

Die Sicherungsplatte 1 ist analog zu Fig. 5 ausgestaltet und weist im oberen Bereich zwei obere Befestigungselemente 6, 7 auf. Das in Fig. 9 links oben befindliche zweite obere Befestigungselement 7 ist schlitzförmig bzw. als schlitzförmige Ausnehmung ausgebildet und ist parallel zu den Seitenkanten 2, 3 ausgerichtet. Das in Fig. 9 rechts oben befindliche erste obere Befestigungselement 6 ist T-förmig bzw. als T-förmige Ausnehmung ausgebildet, kann aber auch anders gestaltet sein, z.B. kreuzförmig oder ebenfalls schlitzförmig bzw. identisch zum zweiten oberen Befestigungselement 7.

Weiters weist die Sicherungsplatte 1 im linken unteren Bereich ein zweites unteres Befestigungselement 9 auf, das ebenfalls schlitzförmig bzw. als schlitzförmige Ausnehmung ausgebildet ist.

Im rechten unteren Bereich der Sicherungsplatte 1 ist das erste untere Befestigungselement 8 in Form einer Ausnehmung vorgesehen. Im vorliegenden Ausführungsbeispiel sind das zweite obere Befestigungselement 7 und die zwei unteren Befestigungselemente 8, 9 gleich ausgestaltet.

Alternativ kann anstelle des ersten unteren Befestigungselements 8 im rechten unteren Bereich der Sicherungsplatte 1 aber auch kein weiteres Befestigungselement bzw. keine Ausnehmung vorgesehen sein.

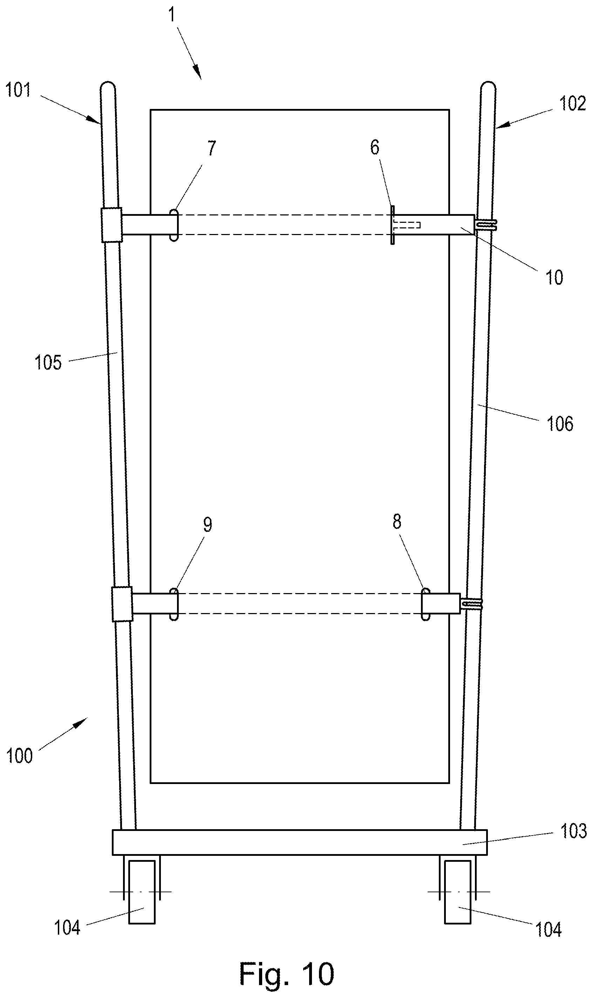

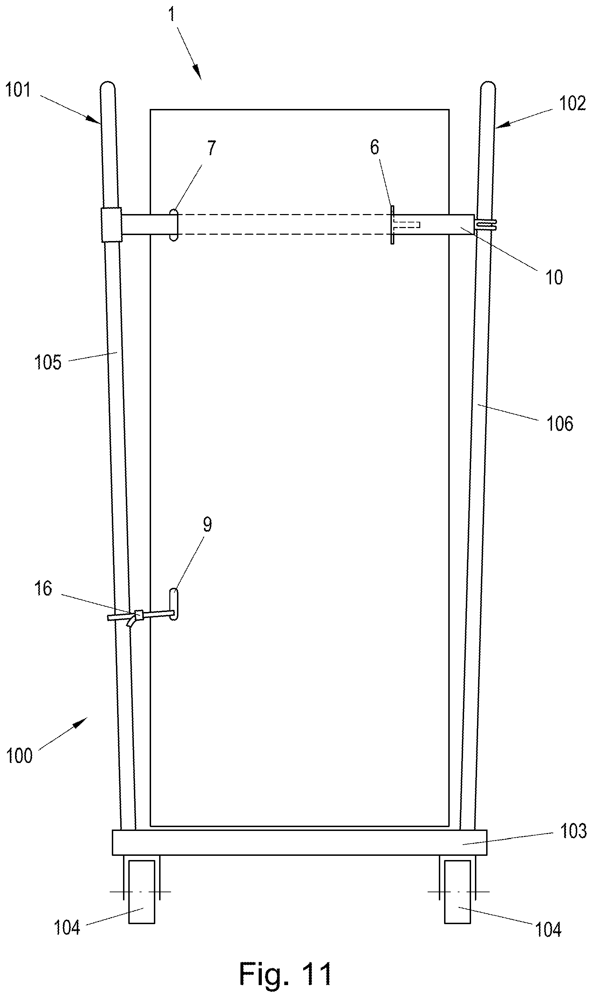

In den Fig. 10 und 11 sind zwei vorteilhafte Varianten von Transportsicherungen gezeigt:
Die Sicherungsplatte 1 gemäß Fig. 10 ist so wie in Fig. 9 ausgestaltet, Bezugszeichen und Merkmale können grundsätzlich übernommen werden.

Zur Befestigung weist die Sicherungsplatte 1 einen, zwischen der ersten und zweiten Seitenwand 101, 102 des Rollbehälters 100 spannbaren, elastischen oberen Gurt 10 und einen, ebenso zwischen der ersten und zweiten Seitenwand 101, 102 des Rollbehälters 100 spannbaren, unteren Gurt 13 auf.

Der obere Gurt 10 ist durch die zwei oberen Befestigungselemente 6, 7 durchgeführt und ist dadurch relativ beweglich zur Sicherungsplatte 1 gelagert. Der elastische untere Gurt 13 ist durch die zwei unteren Befestigungselemente 8, 9 durchgeführt und ist dadurch ebenfalls relativ beweglich zur Sicherungsplatte 1 gelagert. Der obere sowie der untere Gurt 10, 13 weisen dabei jeweils ein Verbindungselement 11, 14, z.B. einen Haken, zur reversiblen Verbindung mit einer der Seitenwände 101, 102 bzw. Stangen 105, 106 auf. Insbesondere sind die beiden Gurte 10, 13 identisch in Eigenschaften, Material und Dimensionen.

Die Sicherungsplatte 1 gemäß Fig. 11 ist ähnlich wie in Fig. 9 ausgestaltet, Bezugszeichen und Merkmale können grundsätzlich übernommen werden.

Allerdings ist im Unterschied zu Fig. 9 im rechten unteren Bereich der Sicherungsplatte 1 kein erstes unteres Befestigungselement 8 bzw. keine Ausnehmung in der Sicherungsplatte 1 vorgesehen.

Im weiteren Unterschied zu der in Fig. 10 dargestellten Transportsicherung ist als linkes unteres Befestigungsmittel ein Kabelbinder 16 vorgesehen, der eine irreversible und unlösbare bzw. nicht zerstörungsfrei lösbare Verbindung zwischen der Befestigungsstange 105 und dem zweiten unteren Befestigungselement 9 darstellt. Der Kabelbinder 16 ist dabei als mit sich selbst verbundene Schlaufe mit einem gewissen Spiel, zur Ermöglichung einer Schwenk- bzw. Rotationsbewegung, um die Befestigungsstange 105 herum und durch das zweite untere Befestigungselement 9 geführt.

Im Bereich rechts unten kann, analog zu Fig. 6, ein an der Bodenplatte 103 angeordnetes Blockierelement 107 vorgesehen sein. Die Sicherungsplatte 1 liegt im Beispiel gemäß Fig. 11 auch näher bzw. mit geringerem Abstand zur Bodenplatte 103.

Die Ausführungen zu den Fig. 1 bis 8, beispielsweise zu Material oder Eigenschaften der Gurte 10, 13 oder zu Dimensionen, sind auf die Ausführungsformen der Fig. 9 bis 11, soweit passend bzw. mit entsprechenden Anpassungen, übertragbar.

Besonders vorteilhaft ist eine Transportsicherung, zur Sicherung von Waren auf einem Rollbehälter 100 mit einer ersten Seitenwand 101 und einer der ersten Seitenwand 101 parallel gegenüberstehenden zweiten Seitenwand 102, wobei zwischen den Seitenwänden offene Seiten ausgebildet sind, wobei die Transportsicherung eine Sicherungsplatte 1 zur Abdeckung einer offenen Seite aufweist, wobei die Sicherungsplatte 1 in ihrem oberen Bereich zumindest zwei obere Befestigungselemente 6, 7 zur Befestigung, Anordnung und/oder Einziehung eines zwischen der ersten und zweiten Seitenwand 101, 102 des Rollbehälters 100 spannbaren oberen Gurtes 10 aufweist, und wobei im unteren Bereich der Sicherungsplatte 1 zumindest ein unteres Befestigungselement 8, 9 zum Anbringen eines unteren Befestigungsmittels 13, 16 zur Befestigung der Sicherungsplatte 1 an der ersten und/oder der zweiten Seitenwand 101, 102 vorgesehen ist, dadurch gekennzeichnet, dass in den oberen Befestigungselementen 6, 7 und/oder durch die oberen Befestigungselemente 6, 7 ein elastisch dehnbarer oberer Gurt 10 geführt und/oder eingezogen ist, wobei der obere Gurt 10 relativ beweglich zur Sicherungsplatte 1 geführt ist.

## Patentansprüche

1. Transportsicherung zur Sicherung von Waren auf einem Rollbehälter (100) mit einer ersten Seitenwand (101) und einer der ersten Seitenwand (101) parallel gegenüberstehenden zweiten Seitenwand (102), wobei zwischen den Seitenwänden offene Seiten ausgebildet sind, wobei die Transportsicherung eine Sicherungsplatte (1) zur Abdeckung einer offenen Seite aufweist,
wobei die Sicherungsplatte (1) in ihrem oberen Bereich zumindest zwei obere Befestigungselemente (6, 7) zur Befestigung eines zwischen der ersten und zweiten Seitenwand (101, 102) des Rollbehälters (100) spannbaren oberen Gurtes (10) aufweist, und wobei im unteren Bereich der Sicherungsplatte (1) zumindest ein unteres Befestigungselement (8, 9) zum Anbringen eines unteren Befestigungsmittels (13, 16) zur Befestigung der Sicherungsplatte (1) an der ersten und/oder der zweiten Seitenwand (101, 102) vorgesehen ist, **dadurch gekennzeichnet, dass**
in den oberen Befestigungselementen (6, 7) ein elastisch dehnbarer oberer Gurt (10) geführt ist, wobei der obere Gurt (10) relativ beweglich zur Sicherungsplatte (1) geführt ist.

2. Transportsicherung nach Anspruch 1, wobei die Sicherungsplatte (1) eine Oberkante (4) und eine Unterkante (5) aufweist, und seitlich von zwei Seitenkanten (2, 3) begrenzt ist, wobei die oberen Befestigungselemente (6, 7) derart angeordnet sind, dass der obere Gurt (10) parallel zur Oberkante (4) geführt ist oder führbar ist, wobei insbesondere vorgesehen ist, dass die oberen Befestigungselemente (6, 7) spiegelsymmetrisch zu einer parallel zu den Seitenkanten (2,3) verlaufenden Längsachse (8) der Sicherungsplatte (1) ausgebildet sind, wobei vorzugsweise vorgesehen ist, dass genau zwei obere Befestigungselemente (6, 7) vorgesehen sind.

3. Transportsicherung nach einem der Ansprüche 1 oder 2, wobei vorgesehen ist, dass der obere Gurt (10) an einem ersten Ende ein erstes Verbindungselement (11) zur reversiblen Verbindung mit einer der Seitenwände (101, 102) des Rollbehälters (100) aufweist, wobei vorzugsweise vorgesehen ist, dass das erste Verbindungselement (11) als Haken zum Einhaken in die Seitenwand (101, 102) ausgebildet ist.

4. Transportsicherung nach einem der Ansprüche 1 bis 3, wobei in dem zumindest einen, insbesondere zwei, unteren Befestigungselement (8, 9) ein unteres Befestigungsmittel (13, 16) zur Befestigung an zumindest einer der Seitenwände (101, 102) geführt ist, wobei insbesondere vorgesehen ist, dass als unteres Befestigungsmittel (13, 16) ein unterer, insbesondere elastisch dehnbarer, Gurt (13) vorgesehen ist, wobei der untere Gurt (13) an einem ersten Ende ein erstes Verbindungselement (14) zur reversiblen Verbindung mit einer der Seitenwände (101, 102) des Rollbehälters (100) aufweist.

5. Transportsicherung nach einem der Ansprüche 1 bis 4, wobei an der Sicherungsplatte (1) ein Magnetelement (20) derart angeordnet ist, dass die Sicherungsplatte (1) parallel zu einer Seitenwand (101, 102) des Rollbehälters (100) befestigbar ist.

6. Rollbehälter, insbesondere Rollpalette, mit einer Bodenplatte (103), wobei an der Unterseite der Bodenplatte (103) Rollen (104) angeordnet sind, wobei an der den Rollen (104) abgewandten Oberseite der Bodenplatte (103) seitlich eine erste Seitenwand (101) und eine der ersten Seitenwand (101) gegenüberstehende zweite Seitenwand (102) angeordnet sind, wobei zwischen der ersten und der zweiten Seitenwand (101, 102) zumindest eine Transportsicherung nach einem der Ansprüche 1 bis 5 zur Abdeckung einer weiteren, offenen Seite vorgesehen ist, wobei insbesondere vorgesehen ist, dass die Transportsicherung an der Seitenwand (101, 102) derart verschwenkbar angeordnet ist, dass sie aus einer Anordnung an einer offenen Seite zwischen den Seitenwänden (101, 102) in eine Anordnung entlang einer Seitenwand (101, 102) verschwenkbar ist.

7. Rollbehälter nach Anspruch 6, wobei zwei, insbesondere gleichartig ausgebildete, Transportsicherungen zur Abdeckung der zwei gegenüberliegenden offenen Seiten vorgesehen sind.

8. Rollbehälter nach einem der Ansprüche 6 oder 7, wobei die Seitenwände (101, 102) an den Eckbereichen der Bodenplatte (103) nach oben ragende Stangen (105, 106) zur Befestigung und Verbindung zwischen der Transportsicherung und dem Rollbehälter aufweisen, wobei der obere Gurt (10) an seinem ersten Ende durch das erste Verbindungselement (11) reversibel mit den einander diagonal gegenüberliegenden Verbindungsstangen (106) verbindbar ist und mit seinem zweiten Ende an der im Eckbereich zwischen den Verbindungsstangen (106) angeordneten Befestigungsstange (105) befestigt ist, insbesondere durch eine die Befestigungsstange (105) umgebende Schlaufe (12).

9. Rollbehälter nach Anspruch 8 wenn abhängig über Anspruch 4, wobei der untere Gurt (13) mit seinem zweiten Ende an der Befestigungsstange (105), insbesondere durch eine die Befestigungsstange (105) umgebende Schlaufe (15), befestigt ist, und an seinem ersten Ende durch das Verbindungselement (14) reversibel mit den Verbindungsstangen (106) verbindbar ist.

10. Rollbehälter nach Anspruch 8, wobei das untere Befestigungsmittel (13, 16) mit der Sicherungsplatte (1) und mit der Befestigungsstange (105), insbesondere unlösbar bzw. nicht abnehmbar, verbunden ist, wobei vorzugsweise vorgesehen ist, dass als unteres Befestigungsmittel ein, insbesondere durch Verkleben oder Tackern, unlösbar verbundener Klettverschluss (16) oder ein Kabelbinder vorgesehen ist.

11. Rollbehälter nach Anspruch 10, wobei ein unteres Zusatzfixiermittel (17, 18) vorgesehen ist, wobei das untere Zusatzfixiermittel (17, 18), insbesondere an dem ersten unteren Befestigungselement (8), im unteren Bereich der Sicherungsplatte (1) mit der Sicherungsplatte (1) und mit der Verbindungsstange (106) reversibel verbindbar ist.

12. Rollbehälter nach Anspruch 11, wobei das untere Zusatzfixiermittel als Klettverschluss ausgebildet ist.

13. Rollbehälter nach Anspruch 11, wobei das untere Zusatzfixiermittel als Schnur mit Blockierelement (17) ausgebildet ist.

14. Rollbehälter nach Anspruch 11, wobei das untere Zusatzfixiermittel als Schnur mit verstellbarer Klemme (18) ausgebildet ist.

15. Rollbehälter nach einem der Ansprüche 6 bis 14, wobei an der offenen Seite am Rand der Bodenplatte (103) ein sich über das Niveau der Bodenplatte erhebendes Blockierelement (107) zur Verhinderung des unbeabsichtigten Verschwenkens der Transportsicherung, insbesondere eine in eine Öffnung der Bodenplatte eingesetzte Schraube oder ein durch eine Öffnung in der Bodenplatte durchgeführter Kabelbinder, vorgesehen ist.

## Claims

1. Transport fastening for fastening goods on a roll container (100) having a first side wall (101) and an opposing second side wall (102) parallel to the first side wall (101), wherein open faces are formed between the side walls, wherein the transport fastening has a fastening plate (1) for covering one open face,
wherein the securing plate (1) has, in its upper region, at least two upper fastening elements (6, 7) for fastening an upper belt (10) which can be tensioned between the first and second side walls (101, 102) of the roll container (100), and wherein at least one lower fastening element (8, 9) is provided in the lower region of the securing plate (1) for attaching a lower fastening means (13, 16) for fastening the securing plate (1) to the first and/or second side wall (101, 102), **characterized in that**
an elastically stretchable upper belt (10) is guided in the upper securing elements (6, 7), wherein the upper belt (10) is guided to be movable relative to the fastening plate (1).

2. Transport securing according to claim 1, wherein the securing plate (1) has an upper edge (4) and a lower edge (5), and is bounded laterally by two side edges (2, 3), wherein the upper fastening elements (6, 7) are arranged such that the upper belt (10) is guided or is guidable parallel to the upper edge (4), wherein it is provided in particular that the upper fastening elements (6, 7) are formed to be mirror-symmetrical to a longitudinal axis (8) of the securing plate (1) extending parallel to the side edges (2, 3), wherein it is preferably provided that exactly two upper fastening elements (6, 7) are provided.

3. Transport fastening according to any one of claims 1 or 2, wherein it is provided that the upper belt (10) at a first end has a first connecting element (11) for reversible connection to one of the side walls (101, 102) of the roll container (100), wherein it is preferably provided that the first connecting element (11) is in the form of a hook for hooking into the side wall (101, 102).

4. Transport securing according to any one of claims 1 to 3, wherein a lower fastening means (13, 16) for fastening to at least one of the side walls (101, 102) is guided in the at least one, in particular two, lower fastening elements (8, 9), wherein it is particularly provided that a lower, in particular elastically stretchable, belt (13) is provided as the lower fastening means (13, 16), wherein the lower belt (13) has, at a first end, a first connecting element (14) for reversibly connecting to one of the side walls (101, 102) of the roll container (100).

5. Transport fastening according to any one of claims 1 to 4, wherein a magnetic element (20) is arranged on the fastening plate (1) such that the fastening plate (1) can be secured parallel to a side wall (101, 102) of the roll container (100).

6. Roll container, in particular roll pallet, with a base plate (103), wherein rolls (104) are arranged on the underside of the base plate (103), wherein a first side wall (101) and a second side wall (102) opposite the first side wall (101) are arranged laterally on the upper side of the base plate (103) facing away from the rolls (104), wherein at least one transport fastening according to any one of claims 1 to 5 is provided between the first and second side walls (101, 102) to cover a further, open face, wherein it is provided in particular that the transport fastening is pivotably mounted on the side wall (101, 102) in such a way that it can be pivoted from a position on an open face between the side walls (101, 102) to a position along a side wall (101, 102).

7. Roll container according to claim 6, wherein two transport fastenings, in particular of identical design, are provided for covering the two opposite open faces.

8. Roll container according to any one of claims 6 or 7, wherein the side walls (101, 102), at the corner regions of the base plate (103), have upwardly projecting rods (105, 106) for fastening and connecting between the transport securing and the roll container, wherein the upper belt (10) is reversibly connectable at its first end via the first connecting element (11) to the diagonally opposite connecting rods (106) and is attached at its second end to the fastening rod (105) arranged in the corner region between the connecting rods (106), in particular by means of a loop (12) surrounding the fastening rod (105).

9. Roll container according to claim 8, if dependent on claim 4, wherein the lower belt (13) is secured at its second end to the fastening rod (105), in particular by a loop (15) surrounding the fastening rod (105), and is reversibly connectable at its first end to the connecting rods (106) via the connecting element (14).

10. Roll container according to claim 8, wherein the lower fastening means (13, 16) is connected to the securing plate (1) and to the fastening rod (105), in particular in a non-detachable or non-removable manner, wherein it is preferably provided that a hook and loop fastener (16) or a cable tie, in particular attached in a non-detachable manner by gluing or stapling, is provided as the lower fastening means.

11. Roll container according to claim 10, wherein an additional lower fastening means (17, 18) is provided, wherein the additional lower fastening means (17, 18), in particular on the first lower fastening element (8), in the lower region of the securing plate (1) is reversibly connectable to the securing plate (1) and to the connecting rod (106).

12. Roll container according to claim 11, wherein the lower additional securing means is in the form of a hook and loop fastener.

13. Roll container according to claim 11, wherein the lower additional securing means is in the form of a cord with a locking element (17).

14. Roll container according to claim 11, wherein the lower additional securing means is in the form of a cord with an adjustable clamp (18).

15. Roll container according to any one of claims 6 to 14, wherein, on the open face at the edge of the base plate (103) a locking element (107) rising above the level of the base plate is provided to prevent any unintentional pivoting of the transport fastening, in particular a screw inserted into an opening in the base plate or a cable tie passed through an opening in the base plate.

## Revendications

1. Fixation de transport permettant la fixation de marchandises sur un conteneur à roulettes (100) comprenant une première paroi latérale (101) et une seconde paroi latérale opposée (102) parallèle à la première paroi latérale (101), dans laquelle des faces ouvertes sont formées entre les parois latérales, dans laquelle la fixation de transport comporte une plaque de retenue (1) destinée à recouvrir une face ouverte,
dans laquelle la plaque de retenue (1) présente dans sa région supérieure au moins deux éléments d'immobilisation supérieurs (6, 7) destinés à immobiliser une courroie supérieure (10) qui peut être tendue entre les première et seconde parois latérales (101, 102) du conteneur à roulettes (100), et dans laquelle dans la région inférieure de la plaque de retenue (1) est prévu au moins un élément d'immobilisation inférieur (8, 9) destiné à attacher un moyen de fixation inférieur (13, 16) pour l'immobilisation de la plaque de retenue (1) sur la première et/ou la seconde paroi latérale (101, 102), **caractérisée en ce que**
une courroie supérieure élastiquement extensible (10) est guidée dans les éléments d'immobilisation supérieurs (6, 7), dans laquelle la courroie supérieure (10) est guidée de façon relativement mobile par rapport à la plaque de retenue (1).

2. Fixation de transport selon la revendication 1, dans laquelle la plaque de retenue (1) présente une arête supérieure (4) et une arête inférieure (5), et est limitée latéralement par deux arêtes latérales (2, 3), dans laquelle les éléments d'immobilisation supérieurs (6, 7) sont agencés de telle manière que la courroie supérieure (10) est guidée ou peut être guidée parallèlement à l'arête supérieure (4), dans laquelle il est prévu en particulier que les éléments d'immobilisation supérieurs (6, 7) soient configurés symétriques en miroir à un axe longitudinal (8), s'étendant parallèlement aux arêtes latérales (2, 3), de la plaque de retenue (1) , dans laquelle il est prévu de préférence que précisément deux éléments d'immobilisation supérieurs (7) soient prévus.

3. Fixation de transport selon l'une quelconque des revendications 1 ou 2, dans laquelle il est prévu que la courroie supérieure (10) présente à une première extrémité un premier élément de liaison (11) à des fins de liaison réversible avec une des parois latérales (101, 102) du conteneur à roulettes (100), dans laquelle il est prévu de préférence que le premier élément de liaison (11) soit formé sous la forme d'un crochet destiné à s'accrocher dans la paroi latérale (101, 102).

4. Fixation de transport selon l'une quelconque des revendications 1 à 3, dans laquelle un moyen de fixation inférieur (13, 16) est guidé dans le au moins un, en particulier deux, élément(s) d'immobilisation inférieur(s) (8, 9) pour l'immobilisation au niveau d'au moins une des parois latérales (101, 102), dans laquelle il est prévu en particulier qu'une courroie inférieure (13), en particulier élastiquement extensible, soit prévue en tant que moyen d'immobilisation inférieur (13, 16), dans laquelle la courroie inférieure (13) présente à une première extrémité un premier élément de liaison (14) pour la liaison réversible avec une des parois latérales (101, 102) du conteneur à roulettes (100).

5. Fixation de transport selon l'une des revendications 1 à 4, dans laquelle un élément magnétique (20) est agencé sur la plaque de retenue (1), de telle sorte que la plaque de retenue (1) peut être immobilisée parallèlement à une paroi latérale (101, 102) du conteneur à roulettes (100).

6. Conteneur à roulettes, en particulier palette roulante, comprenant une plaque de fond (103), dans lequel des roulettes (104) sont agencées sur la face inférieure de la plaque de fond (103), dans lequel une première paroi latérale (101) et une seconde paroi latérale (102) opposée à la première paroi latérale (101) sont agencées latéralement sur la face supérieure opposée aux roulettes (104) de la plaque de fond (103), dans lequel entre la première et la seconde paroi latérale (101, 102) est prévue au moins une fixation de transport selon l'une quelconque des revendications 1 à 5 destinée à recouvrir une autre face ouverte, dans lequel il est prévu en particulier que la fixation de transport soit agencée pivotante au niveau de la paroi latérale (101, 102), de sorte qu'elle puisse être pivotée d'une disposition au niveau d'une face ouverte entre les parois latérales (101, 102) à une disposition le long d'une paroi latérale (101, 102).

7. Conteneur à roulettes selon la revendication 6, dans lequel deux fixations de transport, en particulier de configuration similaire, sont prévues pour le recouvrement des deux faces ouvertes opposées l'une à l'autre.

8. Conteneur à roulettes selon l'une quelconque des revendications 6 ou 7, dans lequel les parois latérales (101, 102) présentent, au niveau des zones d'angles de la plaque de fond (103), des montants s'étendant vers le haut (105, 106) pour l'immobilisation et la liaison entre la fixation de transport et le conteneur à roulettes, dans lequel la courroie supérieure (10) peut être reliée de façon réversible, au niveau de sa première extrémité via le premier élément de liaison (11), aux montants de liaison opposés diagonalement les uns aux autres, et est fixée par sa seconde extrémité au montant d'immobilisation (105) disposé dans la zone d'angle entre les montants de liaison (106), en particulier par le biais d'une boucle (12) entourant le montant d'immobilisation (105).

9. Conteneur à roulettes selon la revendication 8, si dépendante de la revendication 4, dans lequel la courroie inférieure (13) est fixée par sa seconde extrémité au montant d'immobilisation (105), en particulier par le biais d'une boucle (15) entourant le montant d'immobilisation (105), et peut être reliée de façon réversible, au niveau de sa première extrémité via l'élément de liaison (14), aux montants de liaison (106).

10. Conteneur roulant selon la revendication 8, dans lequel le moyen de fixation inférieur (13, 16) est relié à la plaque de sécurité (1) et à la barre de fixation (105), en particulier de manière indissociable ou non amovible, de préférence de telle sorte que le moyen de fixation inférieur soit une fermeture auto-agrippante (16) reliée de manière permanente, notamment par collage ou agrafage, ou un collier de serrage.

11. Conteneur à roulettes selon la revendication 10, dans lequel un moyen de fixation supplémentaire inférieur (17, 18) est prévu, dans lequel le moyen de fixation supplémentaire inférieur (17, 18), en particulier au niveau du premier élément d'immobilisation inférieur (8), peut être relié de façon réversible, dans la zone inférieure de la plaque de retenue (1), à la plaque de retenue (1) et au montant de liaison (106).

12. Conteneur à roulettes selon la revendication 11, dans lequel le moyen de fixation supplémentaire inférieur est configuré sous la forme d'une bande auto-agrippante.

13. Conteneur à roulettes selon la revendication 11, dans lequel le moyen de fixation supplémentaire inférieur est configuré sous la forme d'un cordon doté d'un élément de blocage (17).

14. Conteneur à roulettes selon la revendication 11, dans lequel le moyen de fixation supplémentaire inférieur est configuré sous la forme d'un cordon doté d'une pince réglable (18).

15. Conteneur à roulettes selon l'une quelconque des revendications 6 à 14, dans lequel sur la face ouverte sur le bord de la plaque de fond (103), un élément de blocage (107) s'élevant au-dessus du niveau de la plaque de fond est prévu pour empêcher le pivotement involontaire de la fixation de transport, en particulier une vis insérée dans un orifice de la plaque de fond ou un collier de serrage introduit à travers un orifice de la plaque de fond.
